# EUROPÄISCHE PATENTSCHRIFT

(11) **EP 3 512 749 B1**
(45) Veröffentlichungstag und Bekanntmachung des Hinweises auf die Patenterteilung: **15.07.2020**
(21) Anmeldenummer: 17755176.9
(22) Anmeldetag: 21.08.2017
(51) Int. Cl.: B61C 17/00, H02B 1/052, H02B 1/26, H02B 1/30, H02B 1/50, H02B 1/54, H05K 5/02, H05K 7/14, B60T 17/22, C25D 11/04

(54) **RAHMEN FÜR EINE BREMSSTEUEREINRICHTUNG EINES SCHIENENGEBUNDENEN FAHRZEUGS**
FRAME FOR A BRAKE CONTROL DEVICE OF A RAILBOUND VEHICLE
CADRE POUR UN DISPOSITIF DE COMMANDE DE FREINAGE D'UN VÉHICULE SUR RAILS

(30) Priorität: 16.09.2016 DE 102016117499
(43) Veröffentlichungstag der Anmeldung: 24.07.2019
(73) Patentinhaber: KNORR-BREMSE Systeme für Schienenfahrzeuge GmbH, 80809 München (DE)
(72) Erfinder: WACH, Jörg-Johannes, 81247 München (DE); MANN, Hartmut, 85232 Bergkirchen (DE); LAMPRECHT, Marcus, 85375 Neufahrn (DE); IMGRUNT, Eugen, 80992 München (DE)
(86) Internationale Anmeldenummer: PCT/EP2017/071008
(87) Internationale Veröffentlichungsnummer: WO 2018/050395

(56) Entgegenhaltungen:
- WO-A1-86/07497
- WO-A1-2012/037953
- WO-A1-2015/106803
- CH-A- 494 285
- DE-A1- 19 908 617
- DE-A1-102008 009 217

## Beschreibung

Die vorliegende Erfindung bezieht sich auf einen Rahmen für eine Bremssteuereinrichtung eines schienengebundenen Fahrzeugs.

Herkömmliche Rahmen für eine Bremssteuereinrichtung eines schienengebundenen Fahrzeugs sind üblicherweise geschweißt. Dabei wird entweder Stahl oder Aluminium verwendet. Die Rahmen sind üblicherweise lackiert, insbesondere wenn kein Edelstahl oder Aluminium verwendet wird. Die herkömmlichen Rahmen werden während der Entwicklung an kundenspezifische Einbauräume angepasst und während der Fertigung dann in einem Werk gefertigt, das über Schweiß- und Lackierstationen verfügt.

Die WO 2012/037953 A1 beschreibt einen Wagenkasten für ein Schienenfahrzeug und Verfahren zu dessen Herstellung. Die CH 494 285 A offenbart ein Verfahren zum Erzeugen von korrosionsbehindernden Schutzschichten an Körpern aus Aluminium oder Aluminium-Legierungen durch anodische Behandlung in sauren Bädern. Die WO 2015/106803 A1 beschreibt ein Druckluftgerüst einer elektrischen Lokomotive.

Es ist die Aufgabe der vorliegenden Erfindung, einen Rahmen für eine Bremssteuereinrichtung eines schienengebundenen Fahrzeugs vorzusehen, der die vorstehend geschilderten Nachteile beseitigt. Insbesondere soll die Flexibilität des Rahmens erhöht werden, während gleichzeitig die Fertigungskosten reduziert werden.

Diese Aufgabe wird durch einen Rahmen für eine Bremssteuereinrichtung eines schienengebundenen Fahrzeugs mit den Merkmalen des Anspruchs 1 gelöst. Vorteilhafte Weiterbildungen sind Gegenstand der abhängigen Ansprüche.

Der Rahmen für eine Bremssteuereinrichtung eines schienengebundenen Fahrzeugs besteht aus Bauelementen aus Aluminium. Gemäß der Erfindung wird auf ein Schweißen und ein Lackieren des Rahmens verzichtet. Stattdessen sind die Bauelemente des Rahmens durch kraft- oder formschlüssige Verbindungsvorrichtungen miteinander verbunden, und der Rahmen ist mit einer passivierten, elektrisch leitenden Oberflächenbeschichtung versehen.

In vorteilhafter Weise kann die Flexibilität des Rahmens dadurch erhöht werden, während gleichzeitig die Fertigungskosten reduziert werden.

Im Folgenden wird ein Ausführungsbeispiel der vorliegenden Erfindung anhand der Figuren beschrieben. Es zeigen:
- Fig. 1: einen Gesamtaufbau eines Rahmen einer Bremssteuereinrichtung eines schienengebundenen Fahrzeugs gemäß einem Ausführungsbeispiel der vorliegenden Erfindung; und
- Fig. 2: den leeren Rahmen aus der Fig. 1.

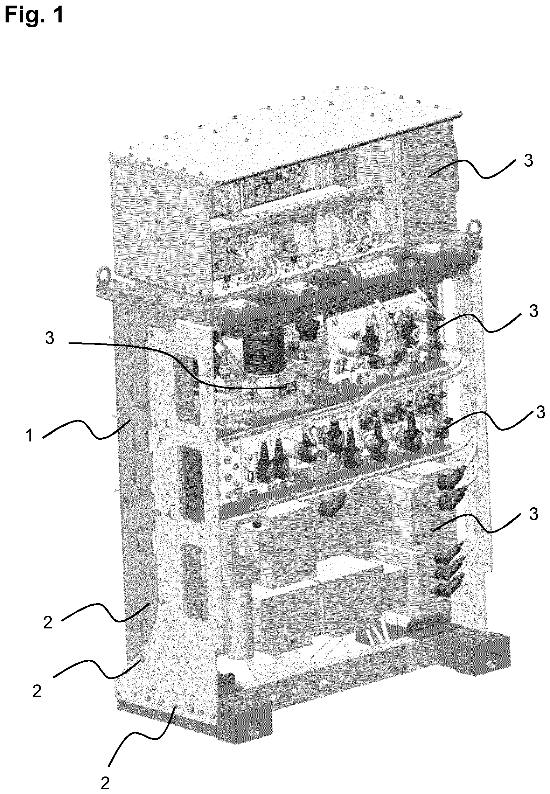

**Fig. 1** zeigt einen Gesamtaufbau eines Rahmens 1 einer Bremssteuereinrichtung eines schienengebundenen Fahrzeugs (nicht gezeigt) gemäß einem Ausführungsbeispiel der vorliegenden Erfindung. Die Bremssteuereinrichtung verfügt über mehrere pneumatische, elektrische und elektromechanische Komponenten 3, die die Bremssteuerung des schienengebundenen Fahrzeugs bewirken.

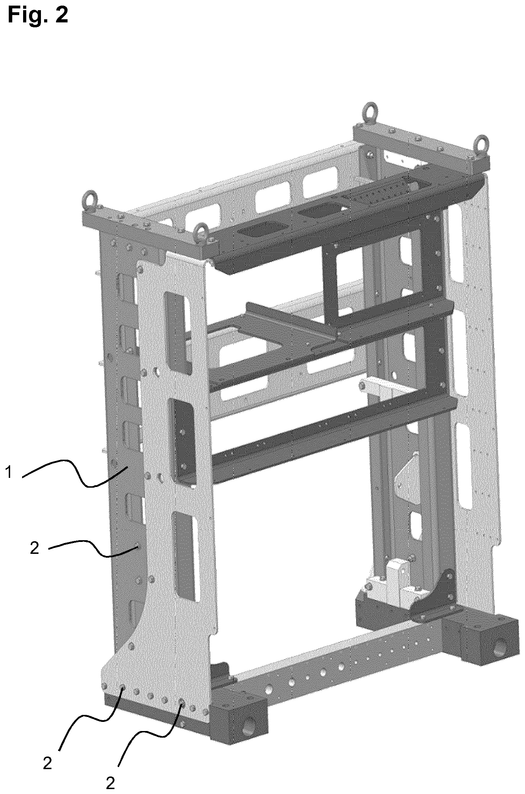

**Fig. 2** zeigt den leeren Rahmen 1 des Ausführungsbeispiels der vorliegenden Erfindung, aus dem zur besseren Übersicht die pneumatischen, elektrischen und elektromechanischen Komponenten 3 entfernt wurden. Der Rahmen besteht aus Bauelementen aus Aluminium, so dass eine Gewichtsreduzierung gegenüber herkömmlichen Rahmen aus Stahl oder Edelstahl erreicht wird.

Der Rahmen 1 gemäß der Erfindung ist weder verschweißt noch lackiert. Stattdessen sind die Bauelemente des Rahmens 1 durch kraft- oder formschlüssige Verbindungsvorrichtungen 2 miteinander verbunden, und der Rahmen 1 ist mit einer passivierten, elektrisch leitenden Oberflächenbeschichtung versehen.

Vorzugsweise sind die Verbindungsvorrichtungen 2 Schrauben. Alternativ können die Verbindungsvorrichtungen 2 auch Nieten oder Schließringbolzen sein.

Indem der Rahmen 1 nicht verschweißt ist, kann ein standardisiertes Grundkonzept für weitere Projekte erzeugt werden. Eine Optimierung des Entwicklungsaufwandes ist durch die Wiederverwendbarkeit einzelner Bauteile gegeben. Ferner ist eine flexible Anpassung an die kundenspezifischen Einbauräume (Höhe x Tiefe x Breite) mit sehr wenig Änderungsaufwand oder zusätzlichen Bauteilen möglich (z.B. zusätzliche Anbindung zum Fahrzeugwagenkasten im oberem Bereich des Rahmens 1).

Eine einfache und schnelle Montage ist ohne komplizierte Vorrichtung möglich. Die Montage kann modular in mehrere Segmente aufgeteilt werden und bei verschiedenen Fertigungsstationen und in verschiedenen Orten erfolgen. Eine Montage direkt am Endmontageort ist dadurch auch möglich.

Fertigungsschritte zum Schweißen einschließlich den Abnahme und Zertifizierungskosten entfallen, die wegen unterschiedlicher Normenlage international unterschiedlich sind, was eine Unabhängigkeit vom Fertigungsstandort ermöglicht. Auch Fertigungsschritte zum Lackieren einschließlich den Abnahme und Zertifizierungskosten entfallen, die wegen unterschiedlicher Normenlage international unterschiedlich sind, was eine Unabhängigkeit vom Fertigungsstandort ermöglicht.

Die nichtlackierten Oberflächen des Rahmens 1 ermöglichen ein sauberes und einfaches Erdungskonzept zwischen den Rahmenteilen und zu den Modulen bzw. Geräten. Die Oberflächen sind zudem mit der passivierten, elektrisch- leitenden Oberflächenbeschichtung versehen.

Die vorliegende Erfindung ist nicht auf die dargestellten Ausführungsbeispiele beschränkt, sondern umfasst Änderungen und Abwandlungen innerhalb des Umfangs der beigefügten Ansprüche.

### BEZUGSZEICHENLISTE

- 1: Rahmen
- 2: kraft- oder formschlüssige Verbindungsvorrichtung
- 3: pneumatische, elektrische und elektromechanische Komponenten

## Patentansprüche

1. Rahmen (1) für eine Bremssteuereinrichtung eines schienengebundenen Fahrzeugs, der aus Bauelementen aus Aluminium besteht,
**dadurch gekennzeichnet, dass**
der Rahmen (1) nicht geschweißt ist;
die Bauelemente des Rahmens (1) durch kraft- oder formschlüssige Verbindungsvorrichtungen (2) miteinander verbunden sind;
der Rahmen (1) nicht lackiert ist; und
der Rahmen mit einer passivierten, elektrisch leitenden Oberflächenbeschichtung versehen ist.

2. Rahmen gemäß Anspruch 1,
wobei die Verbindungsvorrichtungen (2) eine Schraube aufweisen.

3. Rahmen gemäß Anspruch 1 oder 2,
wobei die Verbindungsvorrichtungen (2) einen Niet aufweisen.

4. Rahmen gemäß einem der vorherigen Ansprüche,
wobei die Verbindungsvorrichtungen (2) einen Schließringbolzen aufweisen.

## Claims

1. Frame (1) for a brake control device of a rail-bound vehicle, which consists of assemblies made from aluminium,
**characterised in that**
the frame (1) is not welded;
the components of the frame (1) are connected to one another by means of frictional or interlocking connecting devices (2);
the frame (1) is not painted; and
the frame is provided with a passivated, electrically conductive surface coating.

2. Frame according to Claim 1,
wherein the connecting devices (2) comprise a screw.

3. Frame according to Claims 1 or 2,
wherein the connecting devices (2) comprise a rivet.

4. Frame according to any of the preceding claims,
wherein the connecting devices (2) comprise a locking ring bolt.

## Revendications

1. Cadre (1) d'un dispositif de commande de frein d'un véhicule guidé sur rail qui est constitué d'éléments constitutifs en aluminium,
**caractérisé en ce que**
le cadre (1) n'est pas soudé ;
les éléments constitutifs du cadre (1) sont assemblés entre eux par des systèmes (2) de liaison à complémentarité de forme ou à coopération de force ;
le cadre (1) n'est pas vernis ; et
le cadre est pourvu d'un revêtement de surface passivé et conducteur de l'électricité.

2. Cadre suivant la revendication 1,
dans lequel les systèmes (2) de liaison ont une vis.

3. Cadre suivant la revendication 1 ou 2,
dans lequel les systèmes (2) de liaison ont un rivet.

4. Cadre suivant l'une des revendications précédentes,
dans lequel les systèmes (2) de liaison ont un axe d'anneau de fermeture.
